(19) Europäisches Patentamt
European Patent Office
Office européen des brevets

(11) **EP 4 328 415 A1**

(12) **EUROPEAN PATENT APPLICATION**

(43) Date of publication:
**28.02.2024 Bulletin 2024/09**

(51) International Patent Classification (IPC):
**E21B 34/02** (2006.01)   **F16K 47/08** (2006.01)
**E21B 43/12** (2006.01)

(21) Application number: **22306247.2**

(22) Date of filing: **23.08.2022**

(52) Cooperative Patent Classification (CPC):
**E21B 34/025; E21B 43/12; F16K 47/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BP Corporation North America Inc.
Houston, TX 77079 (US)**

(72) Inventors:
• **ELLIOTT, Gregory Scott
  Houston, 77079 (US)**

• **DUTTON, Jonathan Craig
  Houston, 77079 (US)**
• **AGRAWAL, Aman
  Houston, 77079 (US)**
• **KOPLIKU, Ardjan
  Houston, 77079 (US)**
• **TOUBER, Emile
  Houston, 77079 (US)**
• **WIN, Stephen
  Houston, 77079 (US)**

(74) Representative: **Ipsilon
Le Centralis
63, avenue du Général Leclerc
92340 Bourg-la-Reine (FR)**

(54) **CHOKE VALVES**

(57)    A choke valve includes an inlet, an outlet, and a cage downstream of the inlet and upstream of the outlet. The cage includes a plurality of ports, and each port of the cage includes a converging-diverging profile.

**FIG. 2**

## Description

### CROSS-REFERENCE TO RELATED APPLICATIONS

Not applicable.

### STATEMENT REGARDING FEDERALLY SPONSORED RESEARCH OR DEVELOPMENT

Not applicable.

### BACKGROUND

Erosive fluid flow is prevalent in a number of industrial applications. For instance, fluid flows associated with subterranean wellbores may carry particulates at relatively high velocities (e.g., such as when passing through a constriction). The particulates may impact the fluid-facing surfaces within the fluid-bearing equipment in and/or around the wellbore which thereby may result in a considerable amount of erosion and a corresponding reduction in service life.

### BRIEF DESCRIPTION OF THE DRAWINGS

For a detailed description of various exemplary embodiments, reference will now be made to the accompanying drawings in which:

FIG. 1 is a schematic view of a wellhead system including a choke valve according to some embodiment;
FIG. 2 is a cross-sectional view of the choke valve of the wellhead system of FIG. 1 according to some embodiments; and
FIGS. 3-8 are cross-sectional views of ports of a cage in the choke valve of FIG. 2 according to some embodiments.

### DETAILED DESCRIPTION

As previously described, erosive fluid flow may cause a considerable amount of damage to fluid-bearing equipment in a variety of industrial applications. For instance, fluid flows within and/or around a subterranean wellbore for accessing oil, gas, water or other minerals and resources, may carry particulates at relatively high velocities, which thereby result in erosion.

In one particular example, a subterranean wellbore may emit pressurized fluids (e.g., oil, gas, water, condensate, etc.) to the surface. Typically, a wellbore operator may control the pressure and flow rate of the fluids emitted from a subterranean wellbore in order to maintain a desired drawdown pressure (e.g., a difference in pressure between the wellbore and the surrounding subterranean formation) and to provide a controlled amount of fluids from the wellbore to a transmission line (e.g., pipe) or other storage system. In some instances, the pressure and/or flow rate of fluid from the subterranean wellbore is controlled using a choke valve. Thus, an operator may adjust a position (e.g., open, closed, partially open, etc.) of the choke valve to provide a desired output flow rate and pressure of the fluids from the wellbore. As noted above, the fluids emitted from a subterranean wellbore may include particulates, such as sand, silt, etc. As these particulates flow through the choke valve, they may erode the various parts and surfaces therein, which may ultimately shorten the operating life of the choke valve.

Accordingly, embodiments disclosed herein include nozzle designs that may reduce or eliminate erosion associated with industrial fluid flows. In some embodiments, the nozzles of the embodiments disclosed herein may include a converging-diverging profile that may induce a standing shockwave in the fluid flow to ultimately reduce a velocity of the fluid and the erosive effects of any particulates entrained therein. In some embodiments, the nozzles designs may be incorporated into a choke valve so as to reduce an erosive effect of fluids flowing from a subterranean wellbore. Accordingly, through use of the embodiments disclosed herein, an operational life of industrial fluid-bearing equipment (e.g., such as a choke valve used for a subterranean wellbore) may be increased, even when flowing fluids containing otherwise erosive particulates.

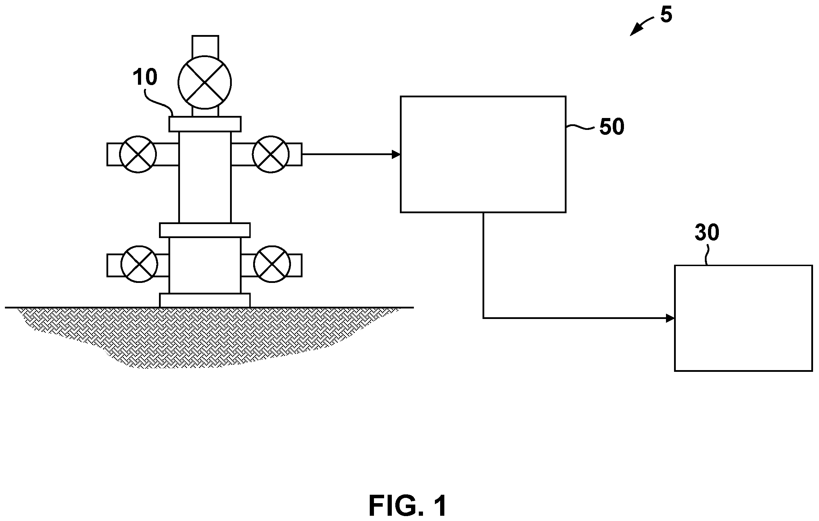

Referring now to FIG. 1, a wellhead system 5 including a choke valve according to some embodiment disclosed herein is shown. Wellhead system 5 includes a wellhead 10 that receives a flow of fluids (e.g., oil, gas, water, condensate, etc.) from a subterranean wellbore (not specifically shown in FIG. 1, but fluidly coupled to wellhead 10). The fluids produced to the wellhead 10 are ultimately flowed to a destination 30 via a choke valve 50.

The destination 30 may comprise any suitable repository, vessel, or other receptacle for receiving the fluids produced from wellhead 10. For instance, in some embodiments, the destination 30 may comprise a pipeline, tank, tanker car, tanker truck, etc.

During operations, the choke valve 50 may be selectively opened or closed so as to control a flow rate and pressure of fluids flowing from the wellhead 10 to the destination 30. In some embodiments, choke valve 50 may be manually controlled or may be electronically controlled (e.g., via a suitable controller or other computer system).

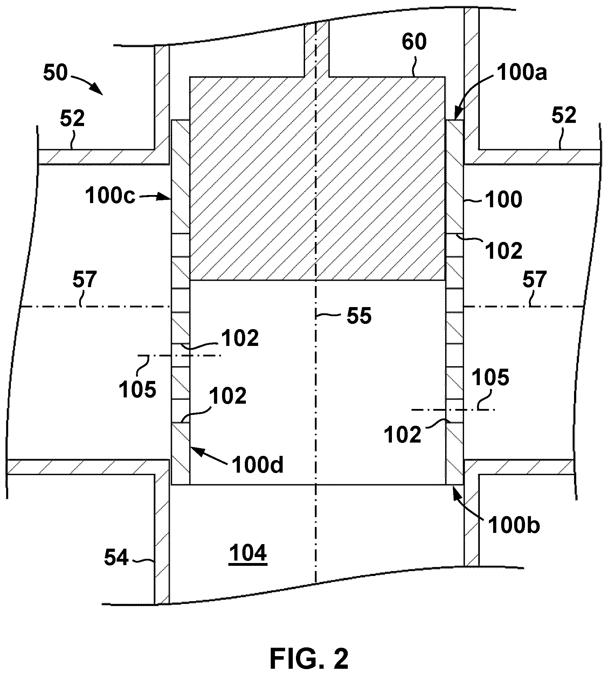

Referring now to FIG. 2, a side-cross-sectional view of choke valve 50 is shown according to some embodiments. Choke valve 50 includes one or more (e.g., a plurality of) inlets 52, and an outlet 54. In some embodiments, the inlets 52 may be arranged along a first axis 57, and the outlet 54 may be arranged along a second axis 55. The second axis 55 may be orthogonal (or perpendicular to) the first axis 57. During operations, fluids emitted from the wellhead 10 (FIG. 1) are flowed into the inlets 52 and then out of the outlet 54 which emits the fluids to the destination 30 (FIG. 1).

In some embodiments, choke valve 50 may comprise a so-called "caged configuration." Specifically, choke valve 50 includes a cage 100 that is installed between the inlets 52 and the outlet 54 that serves as a flow constriction for fluids during operations. Thus, the cage 100 may be positioned downstream of the inlet(s) 52 and upstream of the outlet 54 within the choke valve 50. In some embodiments, cage 100 is a generally cylindrical member that includes a first or upper end 100a and a second or lower end 100b that is opposite the upper end 100a along the axis 55. In addition, cage 100 includes a radially outer surface 100c and a radially inner surface 100d that both extend axially (with respect to the axis 55) between the ends 100a, 100b. The radially inner surface 100d defines a throughbore 104 that extends axially between the ends 100a, 100b along axis 55.

A plurality of holes or ports 102 extend radially (with respect to axis 55) between the radially outer surface 100c and the radially inner surface 100d. Each of the ports 102 includes a central axis 105 that may extend radially relatively to axis 55. In addition, in some embodiments the central axis 105 of each port 102 (or some of the ports 102) may be aligned or parallel to the first axis 57. In some embodiments, an axial length of each of the ports 102 along the corresponding axes 105 may range from about 10 millimeters (mm) to about 35 mm. During operations, fluids that are flowing from the inlets 52 to the outlet 54 are flowed through the ports 102 in the cage 100, from the radially outer surface 100c to the radially inner surface 100d.

A piston 60 is positioned within throughbore 104 of cage 100. During operations, the piston 60 may be moved axially within the throughbore 104 with respect to axis 55. For instance, in some embodiments a manual mechanism (e.g., a handwheel) may be manipulated to move the piston 60 within throughbore 104 along axis 55. In some embodiments, the axial position (with respect to axis 55) of piston 60 within throughbore 104 may be adjusted electronically (e.g., via an electric motor coupled to or including a controller).

An outer diameter of piston 60 may be equal to or slightly less than the inner diameter of throughbore 104 so that piston 60 may slidingly engage with the radially inner surface 100d as the piston 60 is moved axially (with respect to axis 55) within the throughbore 104 of cage 100. During operations, the piston 60 may be moved axially along axis 55 within throughbore 104 to selectively prevent or restrict the flow of fluid through one or more of the ports 102. Thus, the position of the piston 60 within throughbore 104 of cage 100 may determine a total flow rate of fluid through the choke valve 50 during operations.

As fluid progresses through choke valve 50, the fluid may be accelerated when flowing through the ports 102. In some instances, as previously described, the fluid may include sand or other particulates that may impact the walls of ports 102, radially inner surface 100d, radially outer surface 100c, and the piston 60 and result in erosion of these surfaces. Accordingly, the embodiments disclosed herein include ports 102 having a converging-diverging profile that may reduce the velocity of fluids flowing therethrough so that erosion of ports 102, piston 60 and other surfaces of cage 100 may be reduced (or prevented). Specifically, as is described in more detail below, in some embodiments, the ports 102 may have a profile or shape that induces a standing shock wave in the fluid so as to reduce the velocity thereof and reduce erosion during operations.

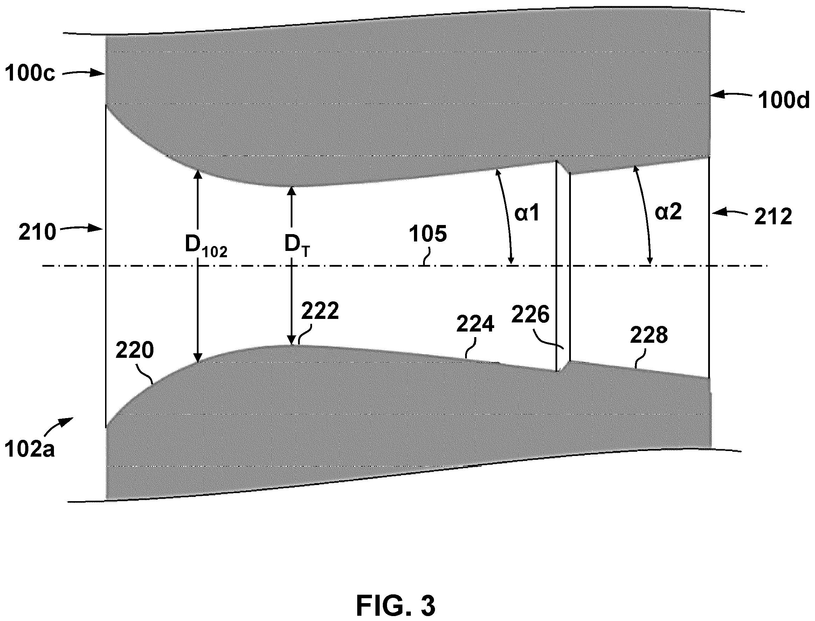

Referring now to FIG. 3, a cross-sectional view of a port 102a that may be utilized as one or more (or all) of the ports 102 in the cage 100 of choke valve 50 is shown according to some embodiments. Port 102a extends between the radially outer surface 100c and the radially inner surface 100d along the axis 105 as previously described. In particular, port 102a includes an inlet 210 at the radially outer surface 100c, and an outlet 212 at the radially inner surface 100d, wherein the inlet 210 and outlet 212 are spaced from one another along axis 105.

A converging section 220 extends axially from the inlet 210 to a throat 222. In addition, a first diverging section 224 extends from throat 222 to a step or constriction 226, and a second diverging section 228 extends from the constriction 226 to the outlet 212. The port 102a may have an inner diameter $D_{102}$ that extends perpendicularly (or radially) relative to axis 105. The inner diameter $D_{102}$ may gradually decrease when moving axially along axis 105 from the inlet 210 along the converging section 220 to the throat 222. Within the throat 222, the inner diameter $D_{102}$ may reach a minimum value within the port 102a, which is identified as a throat diameter $D_T$ in FIG. 3. Thus, the throat 222 may represent the portion of port 102a in which the converging section 220 transitions to the first diverging section 224.

Without being limited to any particularly theory, the throat diameter $D_T$ may affect the performance of port 102 during operations. For instance, a smaller throat diameter $D_T$ may promote faster diffusion of the fluid flow therethrough but may be prone to plugging and faster erosion by particulates flowing in the fluid. On the other hand, a larger throat diameter $D_T$ may make the port 102 more durable and may allow more particulates to pass therethrough. In some embodiments, the throat diameter $D_T$ may range from about 1 mm to about 9 mm.

Moving axially from the throat 222 along the first diverging section 224, the inner diameter $D_{102}$ may gradually increase in value until reaching the constriction 226. Within the constriction 226, the inner diameter $D_{102}$ may decrease from a maximum value reached within the first diverging section 224. However, the reduction in the inner diameter $D_{102}$ within the constriction 226 may still maintain a value of the inner diameter $D_{102}$ that is greater than the throat diameter $D_T$. Thereafter, the inner diameter $D_{102}$ may again gradually increase from the constriction 226 to the outlet 212.

The diverging sections 224, 228 may both be generally frustoconical in shape, which may be easier to machine or form within the port 102a than more complex, curved shapes or profiles. The rate of expansion of the inner diameter $D_{102}$ within the first diverging section 224 and the second diverging section 228 may be characterized by a first diffusion angle $\alpha 1$ and a second diffusion angle $\alpha 2$, respectively. The first diffusion angle $\alpha 1$ and the second diffusion angle $\alpha 2$ may comprise angles measured between the central axis 105 and the inner surface of the first diverging section 224 and the second diverging section 226, respectively. In some embodiments, the diffusion angles $\alpha 1$ and $\alpha 2$ may be the same. However, in other embodiments, the diffusion angles $\alpha 1$ and $\alpha 2$ may be different. Without being limited to this or any other theory, the value of the diffusion angle(s) within the port 102 may affect the location of a standing shockwave within the port 102 during fluid flow operations. More specifically, as the value of the diffusion angles $\alpha 1$ and $\alpha 2$ increases, the location of the shock wave within port 102 may shift toward the inlet 210 along axis 105, and as the value of the diffusion angles $\alpha 1$ and $\alpha 2$ decreases, the location of the shock wave within port 102 may shift toward outlet 212 along axis 105. In some embodiments, the diffusion angles $\alpha 1$ and $\alpha 2$ may range from about 5° to about 20°, or from about 7° to about 15°.

In addition, the location of a standing shockwave within the port 102 may be influenced by a ratio of the cross-sectional area within port 102 at the outlet 212 to the cross-sectional area within the port 102 at the throat 222. This ratio may be referred to herein as the area ratio (AR) of the port 102. In some embodiments, the AR may be chosen to contain a shockwave within the port 102 during operations, for a plurality of different operating pressures (or pressure ratios across the cage 100). In some embodiments, the AR of port 102 may be at least 7.

Without being limited to this or any other theory, the AR may be chosen to contain standing shockwaves within the ports 102 for a given pressure ratio of the pressure within the outlet 54 to the pressure within the inlet(s) 52 ($P_{54}/P_{52}$) within choke valve 50. For instance, an AR of about 7 has been found to adequately contain standing shockwaves within the ports 102 for pressure ratios $P_{54}/P_{52}$ that are less than or equal to 10, such as from about 1.3 to about 10. A pressure ratio of 10 or less may correspond with the expected or typical operating conditions of choke valve 50 within wellhead system 5. Generally speaking, the AR may be increased or decreased as the pressure ratio $P_{54}/P_{52}$ is increased or decreased, respectively, in order to maintain standing shockwaves within the ports 102 (e.g., between inlet 210 and outlet 212). Thus, as the pressure ratio $P_{54}/P_{52}$ increases, the AR may correspondingly be increased to maintain the standing shockwave within the port 102, and as the pressure ratio $P_{54}/P_{52}$ is decreased, the AR may correspondingly be decreased to maintain the standing shockwave within the port 102. In addition, as the AR of ports 102 for a given pressure ratio $P_{54}/P_{52}$ decreases, the standing shockwaves within ports 102 may shift toward the outlet 212 and away from inlet 210, and as the AR of ports 102 for a given pressure ratio $P_{54}/P_{52}$ increases, the standing shockwaves within the ports 102 may shift toward inlet 210.

As shown in FIG. 3, the throat 222 may be positioned axially closer to the inlet 210 than the outlet 212 along axis 105. Thus, the axial length of the converging section 220 may be less than the combined length of the first diverging section 224 and the second diverging section 228. The axial position of the throat 222 along axis 105 may be determined by the desired geometry of the port 102. For instance, the values of throat diameter $D_T$, the diffusion angles $\alpha 1$ and $\alpha 2$, and the AR of the port 102 may determine the axial position of the throat 222 along axis 105, between the inlet 210 and outlet 212.

In some embodiments, the cross-sectional area of the ports 102 at the throat 222 may be determined using Equation (1) below:

$$\sum A_t = \frac{\dot{V}}{\sqrt{\gamma R T}} \qquad (1).$$

In Equation (1), $V$ is a desired volumetric flow rate for fluid through the cage 100, $\gamma$ is the specific heat ratio of the fluid flowing through ports 102, R is the gas constant for the fluid flowing through ports 102, T is the temperature of the fluid flow through ports 102, and $\Sigma A_t$ is the total throat area for all the ports 102 in cage 100. When each of the ports 102 is to have the same size and/or design, the cross-section area for each port 102 at the throat 222 may be determined by dividing $\Sigma A_t$ by the total number of ports 102 in the cage 100.

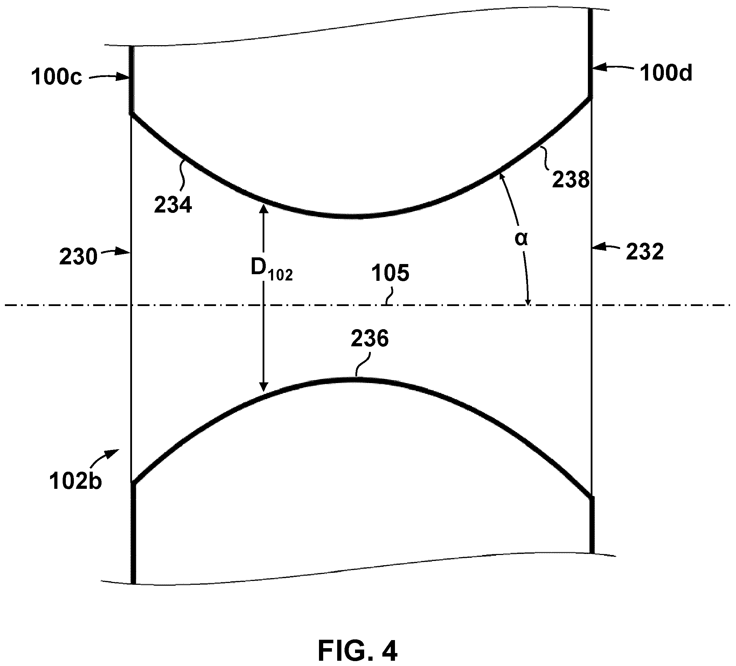

A number of embodiments of port 102 (e.g., ports 102a, 102b, 102c, 102d, 102e, 102f) are described below. Each of these embodiments includes a converging-diverging profile similar to that described above for port 102 shown in FIG. 3. However, each of the embodiments of port 102 (e.g., ports 102a, 102b, 102c, 102d, 102e, 102f) described below also includes features that may be different from those described above for port 102 in FIG. 3. Thus, the description below will focus on the features of the embodiments of ports 102a, 102b, 102c, 102d, 102e, 102f shown in FIGS. 4-8 that are different from the port 102 shown in FIG. 3. In addition, it should be appreciated that the ports 102a, 102b, 102c, 102d, 102e, 102f shown in FIGS. 4-8 may have suitable sizing and parameters (e.g., AR, $D_T$, diffusion angle(s), etc. that are configured to induce a standing shockwave within the port 102 so that erosion is reduced (or prevented) during operations as previously described.

Referring now to FIG. 4, a cross-sectional view of a port 102b that may be utilized as one or more (or all) of the ports 102 in the cage 100 of choke valve 50 is shown according to some embodiments. Port 102b extends between the radially outer surface 100c and the radially inner surface 100d along the axis 105 as previously described. In particular, port 102b includes an inlet 230 at the radially outer surface 100c, and an outlet 232 at the radially inner surface 100d, wherein the inlet 230 and outlet 232 are spaced from one another along axis 105.

A converging section 234 extends axially from the inlet 230 to a throat 236, and a diverging section 238 extends axially from the throat 236 to the outlet 232. The inner diameter $D_{102}$ of port 102b may gradually decrease from the inlet 230 to the throat 236 along the converging section 234 and may gradually increase from the throat 236 to the outlet 232 along the diverging section 238. Thus, the throat 236 may represent the portion of port 102b in which the converging section 234 transitions to the diverging section 238, and at the throat 236, the inner diameter $D_{102}$ may reach a minimum value (e.g., $D_T$) within the port 102b.

As shown in FIG. 4, the throat 236 may be positioned substantially mid-way between the inlet 230 and the outlet 232 along axis 105. Thus, the axial length of the converging section 234 may be substantially the same as the axial length of the diverging section 238. The increased length of the converging section 234 along with the smooth variation in the cross-sectional area within converging section 234 may provide a more uniform flow up to the standing shockwave within port 102, and thus also a more uniform flow at the nozzle outlet 232. In addition, the smooth variations within the converging section 234, throat 236, and diverging section 238 may further avoid (or at least reduce) oblique shockwaves which may occur when discontinuities are present along port 102.

In addition, the diverging section 238 may not include a constriction 226 as shown in FIG. 3 for the port 102. Thus, the diverging section 238 may include a single diffusion angle $\alpha$, which may be similar to that of the diffusion angles $\alpha1$ and $\alpha2$ previously described for port 102.

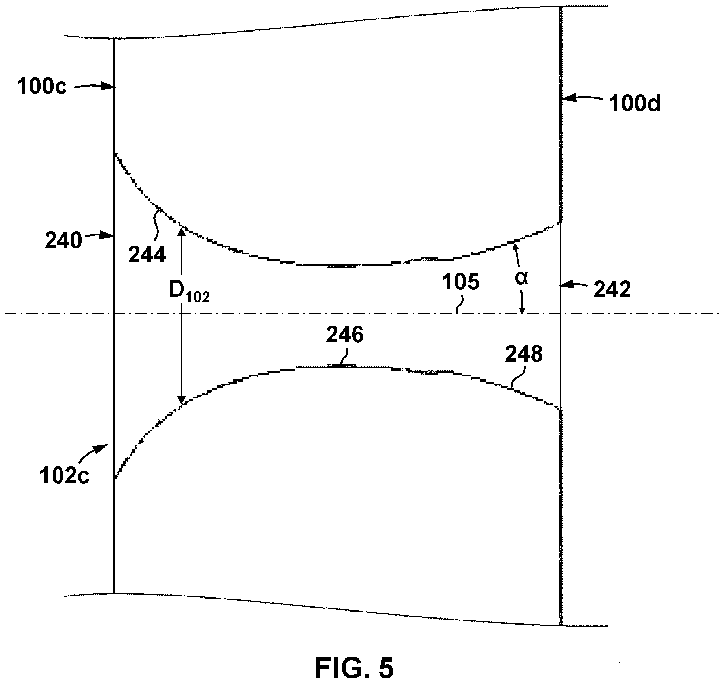

Referring now to FIG. 5, a cross-sectional view of a port 102c that may be utilized as one or more (or all) of the ports 102 in the cage 100 of choke valve 50 is shown according to some embodiments. Port 102c extends between the radially outer surface 100c and the radially inner surface 100d along the axis 105 as previously described. In particular, port 102c includes an inlet 240 at the radially outer surface 100c, and an outlet 242 at the radially inner surface 100d, wherein the inlet 240 and outlet 242 are spaced from one another along axis 105.

A converging section 244 extends axially from the inlet 240 to a throat 246, and a diverging section 248 extends axially from the throat 246 to the outlet 242. The inner diameter $D_{102}$ of port 102c may gradually decrease from the inlet 240 to the throat 246 along the converging section 244 and may gradually increase from the throat 246 to the outlet 242 along the diverging section 248. Thus, the throat 246 may represent the portion of port 102c in which the converging section 244 transitions to the diverging section 248, and at the throat 246, the inner diameter $D_{102}$ may reach a minimum value (e.g., $D_T$) within the port 102c.

As shown in FIG. 5, and as is similarly described above for the port 102b (FIG. 4), the throat 246 may be positioned substantially mid-way between the inlet 240 and the outlet 242 along axis 105. Thus, the axial length of the converging section 244 may be substantially the same as the axial length of the diverging section 248. This increase in the length of the converging section 244 along with the smooth transitions of the converging section 244, throat 246, and diverging section 248 may provide some substantially similar benefits to those described above with respect to port 102b (FIG. 4), such as uniform flow through port 102c as well as avoidance (or reduction) of oblique shock waves. In addition, a diffusion angle $\alpha$ of the diverging section 248 may be reduced relative to a similar angle of the converging section 244 so that the diameter $D_{102}$ is changed at a faster rate within the converging section 244 than the diverging section. Further, the cross-sectional area of the inlet 240 may be larger than the cross-sectional area of the outlet 242..

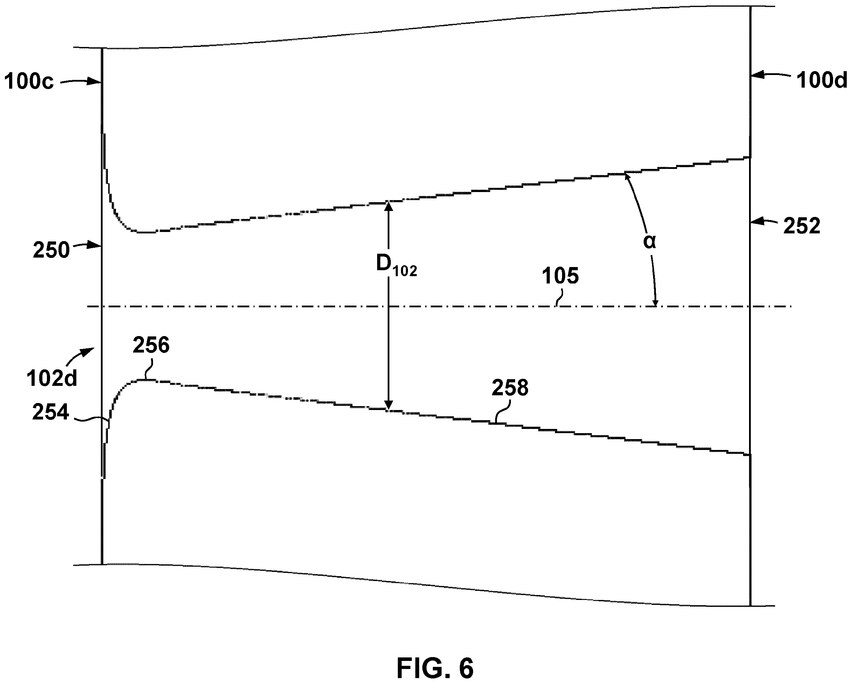

Referring now to FIG. 6, a cross-sectional view of a port 102d that may be utilized as one or more (or all) of the ports 102 in the cage 100 of choke valve 50 is shown according to some embodiments. Port 102d extends between the radially outer surface 100c and the radially inner surface 100d along the axis 105 as previously described. In particular, port 102d includes an inlet 250 at the radially outer surface 100c, and an outlet 252 at the radially inner surface 100d, wherein the inlet 250 and outlet 252 are spaced from one another along axis 105.

A converging section 254 extends axially from the inlet 250 to a throat 256, and a diverging section 258 extends axially from the throat 256 to the outlet 252. The inner diameter $D_{102}$ of port 102d may gradually decrease from the inlet 250 to the throat 256 along the converging section 254 and may gradually increase from the throat 256 to the outlet 252 along the diverging section 258. Thus, the throat 256 may represent the portion of port 102d in which the converging section 254 transitions to the diverging section 258, and at the throat 256, the inner diameter $D_{102}$ may reach a minimum value (e.g., $D_T$) within the port 102d.

As shown in FIG. 6, the throat 256 may be positioned closer to the inlet 250 than the outlet 252 along axis 105. Thus, the axial length of the converging section 254 may be substantially less than the axial length of the diverging section 258, and a majority of the axial length of the port 102d may comprise the diverging section 258. Without being limited to this or any other theory, by allowing the diverging section 258 to occupy a greater percentage of the length of port 102d, the inner diameter $D_{102}$ of the port 102d may be increased for a given AR and diffusion angle $\alpha$. In addition, as is described above for the port 102c, the cross-sectional area of the inlet 250 may be greater than the cross-sectional area of the outlet 252.

Further, the diverging section 258 may have a frustoconical profile or shape. Without being limited to this or any other theory, a frustoconical profile may be easier to machine into the port 102d than a curved profile such as shown in the ports 102b and 102c (FIGS. 4 and 5). Thus, the use of the frustoconical profile within the diverging section 258 may simplify manufacturing operations for port 102d.

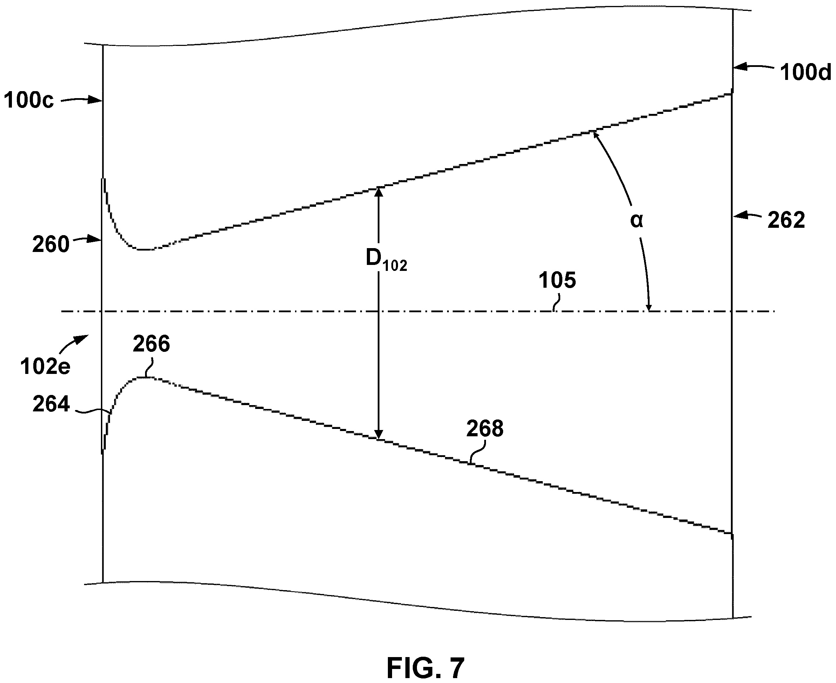

Referring now to FIG. 7, a cross-sectional view of a port 102e that may be utilized as one or more (or all) of the ports 102 in the cage 100 of choke valve 50 is shown according to some embodiments. Port 102e extends between the radially outer surface 100c and the radially inner surface 100d along the axis 105 as previously described. In particular, port 102e includes an inlet 260 at the radially outer surface 100c, and an outlet 262 at the radially inner surface 100d, wherein the inlet 260 and outlet 262 are spaced from one another along axis 105.

A converging section 264 extends axially from the inlet 260 to a throat 266, and a diverging section 268 extends axially from the throat 266 to the outlet 262. The inner diameter $D_{102}$ of port 102e may gradually decrease from the inlet 260 to the throat 266 along the converging section 264 and may gradually increase from the throat 266 to the outlet 262 along the diverging section 268. Thus, the throat 266 may represent the portion of port 102e in which the converging section 264 transitions to the diverging section 268, and at the throat 266, the inner diameter $D_{102}$ may reach a minimum value within the port 102e.

As shown in FIG. 7, the port 102e may be similar to the port 102d (FIG. 6). Thus, the throat 266 may be positioned closer to the inlet 260 than the outlet 262 along axis 105, and the diverging section 268 may have a frustoconical profile or shape. However, unlike the port 102d, the cross-sectional area of the outlet 262 may be greater than the cross-sectional area of the inlet 260.

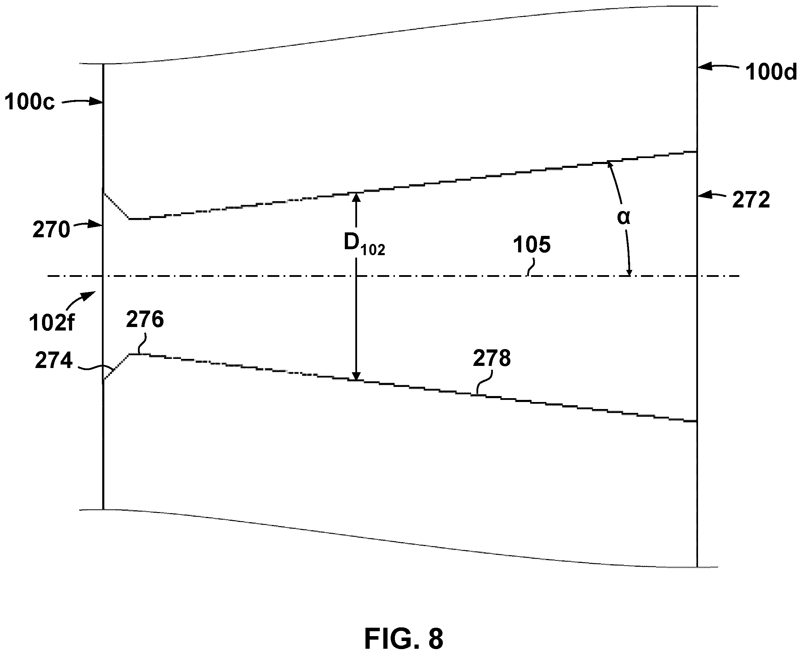

Referring now to FIG. 8, a cross-sectional view of a port 102f that may be utilized as one or more (or all) of the ports 102 in the cage 100 of choke valve 50 is shown according to some embodiments. Port 102f extends between the radially outer surface 100c and the radially inner surface 100d along the axis 105 as previously described. In particular, port 102f includes an inlet 270 at the radially outer surface 100c, and an outlet 272 at the radially inner surface 100d, wherein the inlet 270 and outlet 272 are spaced from one another along axis 105.

A converging section 274 extends axially from the inlet 270 to a throat 276, and a diverging section 278 extends axially from the throat 276 to the outlet 272. The inner diameter $D_{102}$ of port 102f may gradually decrease from the inlet 270 to the throat 276 along the converging section 274 and may gradually increase from the throat 276 to the outlet 272 along the diverging section 278. Thus, the throat 276 may represent the portion of port 102d in which the converging section 274 transitions to the diverging section 278, and at the throat 276, the inner diameter $D_{102}$ may reach a minimum value within the port 102f.

As shown in FIG. 8, the port 102f may be similar to the port 102d (FIG. 6). Thus, the throat 276 may be positioned closer to the inlet 270 than the outlet 272 along axis 105, and the diverging section 278 may have a frustoconical shape or profile. However, unlike the port 102d, the cross-sectional area of the outlet 272 may be greater than the cross-sectional area of the inlet 270, and a diffusion angle $\alpha$ of diverging section 278 may be substantially similar to that of the diverging section 258. However, the converging section 274 may be formed as a frustoconical surface (or chamfer) rather than having a curved cross-sectional profile as shown for converging section 254 of port 102d (FIG. 6). Without being limited to this or any other theory, the frustoconical shape or profile of the converging section 274 and diverging section 278 may simplify manufacturing operations for forming ports 102f in cage 100 (FIG. 2).

The embodiments disclosed herein include nozzle designs that may reduce or eliminate erosion associated with industrial fluid flows. In some embodiments, the nozzles of the embodiments disclosed herein may include a converging-diverging profile that may induce a standing shockwave in the fluid flow to ultimately reduce a velocity of the fluid and the erosive effects of any particulates entrained therein. Accordingly, through use of the embodiments disclosed herein, an operational life of industrial fluid-bearing equipment (e.g., such as a choke valve used for a subterranean wellbore) may be increased, even when flowing fluids containing otherwise erosive particulates.

While many of the particular embodiments disclosed herein comprise nozzles that may be used within a cage of a choke valve for a subterranean wellbore, it should be appreciated that the principles disclosed herein may be utilized in a number of different industrial applications to reduce erosion for fluid-bearing equipment. For instance, also in the field of subterranean wellbores, nozzle designed according to the embodiments disclosed herein may be used within a subterranean wellbore to slow down the injection velocity for carbon capture and storage operations. Specifically, during these operations, carbon dioxide ($CO_2$) may be injected into a subterranean formation via a wellbore, during which an excessive fluid pressure and/or velocity may damage the subterranean formation. As a result, the above-noted nozzle designs may be useful for slowing a velocity of the injected $CO_2$ to thereby reduce the likelihood of damage to the formation during operations.

The discussion above is directed to various exemplary embodiments. However, one of ordinary skill in the art will understand that the examples disclosed herein have broad application, and that the discussion of any embodiment is meant only to be exemplary of that embodiment, and not intended to suggest that the scope of the disclosure, including the claims, is limited to that embodiment.

The drawing figures are not necessarily to scale. Certain features and components herein may be shown exaggerated in scale or in somewhat schematic form and some details of conventional elements may not be shown in interest of clarity and conciseness.

In the discussion herein and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection of the two devices, or through an indirect connection that is established via other devices, components, nodes, and connections. In addition, as used herein, the terms "axial" and "axially" generally mean along or parallel to a given axis (e.g., central axis of a body or a port), while the terms "radial" and "radially" generally mean perpendicular to the given axis. For instance, an axial distance refers to a distance measured along or parallel to the axis, and a radial distance means a distance measured perpendicular to the axis. Further, when used herein (including in the claims), the words "about," "generally," "substantially," "approximately," and the like mean within a range of plus or minus 10%.

While exemplary embodiments have been shown and described, modifications thereof can be made by one skilled in the art without departing from the scope or teachings herein. The embodiments described herein are exemplary only and are not limiting. Many variations and modifications of the systems, apparatus, and processes described herein are possible and are within the scope of the disclosure. Accordingly, the scope of protection is not limited to the embodiments described herein, but is only limited by the claims that follow, the scope of which shall include all equivalents of the subject matter of the claims. Unless expressly stated otherwise, the steps in a method claim may be performed in any order. The recitation of identifiers such as (a), (b), (c) or (1), (2), (3) before steps in a method claim are not intended to and do not specify a particular order to the steps, but rather are used to simplify subsequent reference to such steps.

**Claims**

1. A choke valve, the choke valve comprising:

   an inlet;
   an outlet;
   a cage downstream of the inlet and upstream of the outlet, wherein the cage comprises a plurality of ports;
   wherein each port of the cage comprises a converging-diverging profile.

2. The choke valve of claim 1, wherein each port comprises:

   a port inlet;
   a port outlet;
   a throat positioned between the inlet and the outlet;
   a converging section extending from the port inlet to the throat; and
   a diverging section extending from the throat toward the outlet.

3. The choke valve of claim 2, wherein one or both of the converging section and the diverging section comprises a curved profile.

4. The choke valve of claim 2, wherein one or both of the converging section and the diverging section comprises a frustoconical profile.

5. The choke valve of claim 2, wherein one of the converging section and the diverging section comprises a curved profile, and another of the converging section and the diverging section comprises a frustoconical profile.

6. The choke valve of any one of claims 2-5, wherein the throat is positioned closer to the port inlet than the port outlet along the port.

7. The choke valve of any one of claims 2-6, wherein each port comprises a constriction positioned along the diverging section.

FIG. 1

**FIG. 2**

EP 4 328 415 A1

**FIG. 3**

EP 4 328 415 A1

FIG. 4

FIG. 5

**FIG. 6**

EP 4 328 415 A1

**FIG. 7**

EP 4 328 415 A1

**FIG. 8**

EP 4 328 415 A1

Europäisches
Patentamt

European
Patent Office

Office européen
des brevets

# EUROPEAN SEARCH REPORT

Application Number

EP 22 30 6247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2021 102939 U1 (SAMSON AG [DE]) 16 June 2021 (2021-06-16) * paragraphs [0040], [0041]; claim 7; figures 1-3 * | 1-7 | INV. E21B34/02 F16K47/08 E21B43/12 |
| X | US 2017/234440 A1 (DETMERS ANDREAS [DE] ET AL) 17 August 2017 (2017-08-17) * paragraph [0022]; figures 1-3 * | 1-7 | |
| A | WO 2020/010449 A1 (RGL RESERVOIR MAN INC [CA]) 16 January 2020 (2020-01-16) * figure 5 * | 1-7 | |
| A | US 2022/042394 A1 (WEINTRAUB PRESTON [US] ET AL) 10 February 2022 (2022-02-10) * paragraphs [0004], [0023], [0024]; figures 1,2,10,11 * | 1-7 | |

TECHNICAL FIELDS
SEARCHED      (IPC)

E21B
F16K

The present search report has been drawn up for all claims

| Place of search | Date of completion of the search | Examiner |
|---|---|---|
| Munich | 10 January 2023 | Georgescu, Mihnea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6247

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2023

| Patent document cited in search report | Publication date | Patent family member(s) | Publication date |
|---|---|---|---|
| DE 202021102939 U1 | 16-06-2021 | DE 202021102939 U1 | 16-06-2021 |
| | | WO 2022248187 A1 | 01-12-2022 |
| US 2017234440 A1 | 17-08-2017 | CN 107091367 A | 25-08-2017 |
| | | DE 102016102756 A1 | 17-08-2017 |
| | | US 2017234440 A1 | 17-08-2017 |
| WO 2020010449 A1 | 16-01-2020 | CA 3104752 A1 | 16-01-2020 |
| | | CN 112424444 A | 26-02-2021 |
| | | CO 2021000779 A2 | 29-01-2021 |
| | | US 2021254435 A1 | 19-08-2021 |
| | | WO 2020010449 A1 | 16-01-2020 |
| US 2022042394 A1 | 10-02-2022 | US 2022042394 A1 | 10-02-2022 |
| | | WO 2022031979 A1 | 10-02-2022 |

EPO FORM P0459

For more details about this annex : see Official Journal of the European Patent Office, No. 12/82